# EUROPÄISCHE PATENTANMELDUNG

(11) **EP 4 112 937 A1**
(43) Veröffentlichungstag der Anmeldung: **04.01.2023**
(21) Anmeldenummer: 21183276.1
(22) Anmeldetag: 01.07.2021
(51) Int. Cl.: F04C 18/16, F04C 29/00, F16H 1/06, F01C 21/02, F04C 15/00

(54) **GETRIEBEANORDNUNG MIT EINER GLEITRINGDICHTUNG UND VERFAHREN ZUR MONTAGE EINER GETRIEBEANORDNUNG MIT EINER GLEITRINGDICHTUNG**

(71) Anmelder: Kaeser Kompressoren SE, 96450 Coburg (DE)
(72) Erfinder: Hagemeier, Martin, 96450 Coburg (DE)
(74) Vertreter: Zech, Stefan Markus

(57) **Zusammenfassung**

Die Erfindung betrifft eine Getriebeanordnung (1) zur Verbindung eines Antriebsmotors (2) und eines ölgeschmierten Verdichterblocks (3), insbesondere eines Schraubenverdichters, sowie ein Verfahren zur Montage einer Getriebeanordnung. Die Getriebeanordnung (1) umfasst ein Gehäuse (4), das einen Getrieberaum (11) ausbildet, wobei das Gehäuse (4) eine Wellendurchgangsöffnung (43) zwischen einem Motorraum (12) und dem Getrieberaum (11) aufweist, eine Antriebswelle (7), eine ölgeschmierte Getriebestufe (9), die in dem Getrieberaum (11) angeordnet ist, und die Antriebswelle (7) mit einer Abtriebswelle (8) des Verdichterblocks (3) koppelt, und eine Wellendichtung (5) zur Abdichtung der Wellendurchgangsöffnung (43) gegen Ölaustritt aus dem Getrieberaum (11) in den Motorraum (12), wobei die Wellendichtung (5) und ein getriebeseitiges Antriebslager (20) in einem Aufnahmeraum (13) aufgenommen sind, wobei das getriebeseitige Antriebslager (20) zwischen der Wellendichtung (5) und einem Antriebszahnrad der Getriebestufe (9) angeordnet ist, wobei die Wellendichtung (5) als Gleitringdichtung mit einem relativ zur Antriebswelle (7) verdrehsicher angeordneten Gleitring (51) und einem relativ zum Antriebsgehäuseabschnitt axial und radial festgelegten Gegenring (52) ausgeführt ist.

## Beschreibung

Die Erfindung betrifft eine Getriebeanordnung zur Verbindung eines Antriebsmotors und eines ölgeschmierten Verdichterblocks, insbesondere eines Schraubenverdichters. Außerdem betrifft die Erfindung ein Verfahren zur Montage einer solchen Getriebeanordnung.

Ölgeschmierte bzw. öleingespritzte Schraubenverdichter werden zur Verdichtung von Gasen, insbesondere zur Erzeugung von Druckluft eingesetzt. Das dem Verdichterblock zugeführte Öl dient zur Schmierung, Kühlung und Abdichtung der Rotoren gegenüber dem Gehäuse des Verdichterblocks. Die Lager der Rotorwellen sind typischerweise ölgeschmiert. Der Verdichterblock, in dem die Schraubenrotoren drehbar gelagert sind, kann über eine Direktkupplung, über einen Riemenantrieb oder über ein Zahnradgetriebe durch einen Antriebsmotor angetrieben werden. Für den zuverlässigen Betrieb ist eine Schmierung für das Zahnradgetriebe erforderlich. Die Lager der Antriebswelle des Antriebsmotors sind typischerweise fettgeschmiert.

Für eine kompakte Bauweise des Schraubenverdichters kann der Verdichterblock über ein gemeinsames Gehäuse direkt mit dem Motorblock verbunden sein, wobei für das zwischen dem Motorblock und dem Verdichterblock angeordnete Getriebe kein separates Getriebegehäuse vorgesehen ist. In der Praxis wird der Motorblock häufig separat gefertigt und anschließend mit dem Verdichterblock verbunden. Dabei werden das Motorgehäuse und das Verdichtergehäuse über Flanschverbindungen miteinander verbunden.

Durch die direkte Verbindung des Verdichtergehäuses mit dem Motorgehäuse ist es erforderlich, den Getrieberaum, der fluidisch mit dem Verdichtungsraum des Verdichterblocks verbunden ist, gegenüber dem Motorraum abzudichten, damit zum einen kein Öl in den Motor eindringen kann und zum anderen der Motorraum druckfrei bleibt.

Zum Zweck der Abdichtung des Getrieberaums gegenüber dem Motorraum sind aus dem Stand der Technik verschiedene Arten von Dichtungen bekannt.

Gleitringdichtungen zur Abdichtung rotierender Wellen sind aus dem Stand der Technik an sich bekannt. Die Dichtwirkung wird aufgrund der Berührung (dynamische Dichtung) an den axialen Gleitflächen eines Gleitrings und eines Gegenrings erzeugt. Der Gleitring rotiert mit der Welle mit während der Gegenring ruht. Gleitringdichtungen sind relativ aufwendig und teuer in der Fertigung.

Aus US 4,684,330 A ist eine Gleitringdichtung bekannt, deren Gegenring in einem zusätzlich zum Motorflansch getriebeseitig vorgesehenen Wandteil angeordnet ist. Das getriebeseitige Antriebslager ist im Motorflansch angeordnet. Während der Montage des zusätzlichen Wandteils und der Gleitringdichtung ist die Antriebswelle über das getriebeseitige Antriebslager vollständig im Motorgehäuse gelagert.

US 2002/190475 A1 zeigt eine Gleitringdichtung zur Abdichtung einer Antriebswelle, betrifft aber keinen Schraubenverdichter.

Aus WO 2019/197919 A2 ist eine Labyrinthdichtung bekannt, die als bevorzugt gegenüber reibungsbehafteten Lippendichtungen beschrieben wird. Als vorteilhaft ist insbesondere beschrieben, dass die Labyrinthdichtung mit den vorhandenen Maschinenkomponenten auskommt bzw. dadurch gebildet wird, und keine zusätzlichen Komponenten benötigt.

Lippendichtungen zur Abdichtung rotierender Wellen durch Berührung an der äußeren Wellenumfangsfläche sind aus dem Stand der Technik hinlänglich bekannt. Bei der Montage wird die Dichtlippe durch die Wellenumfangsfläche elastisch verformt. Lippendichtungen sind verschleißanfällig. Für eine möglichst lange Lebensdauer ist eine möglichst zentrierte Anordnung der Lippendichtung bezogen auf die Wellenachse erforderlich.

Eine Lippendichtung wird in EP3091231 A1 gezeigt.

Aus DE 20 2006 012 677 U1 ist eine mit der Welle mitrotierende Lippendichtung bekannt.

In BE 1016596 A3 sind eine Lippendichtung sowie eine Öldichtung, ein O-Ring oder ein V-Ring zur Abdichtung des Gehäuses an der Antriebswelle genannt. Zwischen dem getriebeseitigen Antriebslager und der in die Gehäusewand eingelegten Lippendichtung ist ein axialer Schmierkanal vorgesehen.

WO 2017/059501 A1 beschreibt ein Montageverfahren für eine Lippendichtung (engl.: lip seal), wobei zunächst ein Getriebegehäuse über der Antriebswelle angebracht, anschließend das Getriebegehäuse an dem Motorgehäuse befestigt und dann eine Lippendichtung über der Antriebswelle angebracht wird. Es wird insbesondere auf den Vorteil einer sich selbstzentrierenden Lippendichtung abgestellt. Dafür ist ein Hohlraum im Gehäuse ausgebildet, so dass am äußeren Umfang der Lippendichtung ein radialer Zwischenraum verbleibt. Die auf die Antriebswelle aufgeschobene Lippendichtung kann sich aufgrund der radial wirkenden elastischen Rückstellkräfte der verformten Dichtlippe selbst konzentrisch zur Welle ausrichten. Anschließend wird die Lippendichtung mittels einer getriebeseitig angeordneten Klemmplatte durch eine axiale Klemmkraft endgültig relativ zum Gehäuse fixiert. Dafür ist es technisch erforderlich, dass die Antriebswelle zum Zeitpunkt der Montage der Lippendichtung bereits entsprechend der Betriebsposition gelagert ist, also sowohl durch ein antriebsseitiges Antriebslager (B-seitiges Lager) als auch durch ein getriebeseitiges Antriebslager (A-seitiges Lager). Denn um eine Zentrierung der Lippendichtung zu erreichen, muss zum Zeitpunkt der Montage der Lippendichtung die Lage der Antriebswelle relativ zum Gehäuse bereits endgültig festgelegt sein. Dieses Verfahren zur Selbstzentrierung der Lippendichtung kann zwar unter Umständen eine verlängerte Lebensdauer der Lippendichtung erreichen. Indem die endgültige Positionierung der Antriebswelle vor der Montage der Lippendichtung vorausgesetzt wird, wird aber das getriebeseitige Antriebslager durch die Lippendichtung von dem im Getrieberaum vorhandenen Schmieröl abgeschirmt. Das Festklemmen der Lippendichtung im Gehäuse in der zur Welle zentrierten Position erfordert zusätzlichen Aufwand bei der Montage.

Häufig sind die aus dem Stand der Technik bekannten Gehäusekonstruktionen für ölgeschmierte Verdichter nachteilig hinsichtlich Montage und Wartung oder erreichen nicht die gewünschte kompakte Bauform. Bekannte Anordnungen der Antriebswelle und des Getriebes erfordern oftmals separate Maßnahmen zur Schmierung des getriebeseitigen Antriebslagers. Zur Abdichtung der Antriebswelle gegenüber dem Motorraum werden oft verschleißanfällige Lippendichtungen eingesetzt, die sogar bei guter Zentrierung eine beschränkte Lebensdauer haben.

Ausgehend vom Stand der Technik stellt sich die vorliegende Erfindung die Aufgabe, eine Getriebeanordnung zur Verbindung eines Antriebsmotors und eines ölgeschmierten Verdichterblocks und ein Montageverfahren für eine solche Getriebeanordnung bereitzustellen, die zum einen eine möglichst einfache Schmierung des getriebeseitigen Antriebslagers und zum anderen eine möglichst einfach zu montierende und möglichst dauerhaft wirksame Abdichtung der Antriebswelle gewährleistet.

Diese Aufgabe wird gelöst durch eine Getriebeanordnung nach Anspruch 1, einen Verdichter gemäß Anspruch 12 und ein Verfahren zur Montage einer Getriebeanordnung gemäß Anspruch 13.

Insbesondere wird die Aufgabe gelöst durch eine Getriebeanordnung zur Verbindung eines Antriebsmotors und eines ölgeschmierten Verdichterblocks, insbesondere eines Schraubenverdichters, umfassend ein Gehäuse, das einen Antriebsgehäuseabschnitt und einen Verdichtergehäuseabschnitt aufweist, die miteinander verbunden sind, wobei das Gehäuse einen Getrieberaum ausbildet, wobei der Antriebsgehäuseabschnitt eine Wellendurchgangsöffnung zwischen einem Motorraum und dem Getrieberaum aufweist, eine Antriebswelle des Antriebsmotors, die sich vom Motorraum durch die Wellendurchgangsöffnung hindurch in den Getrieberaum hinein erstreckt, eine ölgeschmierte Getriebestufe, die in dem Getrieberaum angeordnet ist, und die Antriebswelle mit einer Abtriebswelle des Verdichterblocks koppelt und eine Wellendichtung zur Abdichtung der Wellendurchgangsöffnung gegen Ölaustritt aus dem Getrieberaum in den Motorraum, wobei der Antriebsgehäuseabschnitt zwischen der Wellendurchgangsöffnung und dem Getrieberaum einen Aufnahmeraum ausbildet, in dem die Wellendichtung und ein getriebeseitiges Antriebslager der Antriebswelle aufgenommen sind, wobei das getriebeseitige Antriebslager zwischen der Wellendichtung und einem Antriebszahnrad der Getriebestufe angeordnet ist, wobei die Wellendichtung als Gleitringdichtung mit einem relativ zur Antriebswelle verdrehsicher angeordneten Gleitring und einem relativ zum Antriebsgehäuseabschnitt axial und radial festgelegten Gegenring ausgeführt ist.

Durch die Erfindung kann das Erfordernis der (exakten) Zentrierung der Wellendichtung, insbesondere wie es für die aus dem Stand der Technik bekannten Lippendichtungen erforderlich ist, relativ zum Gehäuse umgangen werden. Insbesondere das in WO 2017/059501 A1 durch Selbstzentrierung gelöste Problem besteht bei einer erfindungsgemäßen Gleitringdichtung nicht. Eine gegebenenfalls fertigungs- oder montagebedingte Exzentrizität (radialer Versatz) zwischen der Längsachse der Antriebswelle und der Wellendurchgangsöffnung bzw. dem damit verbundenen Gegenring gleichen sich durch die verwendete Gleitringdichtung (bauartbedingt) entlang der (sich radial erstreckenden) Berührungsebene (Gleitflächen) zwischen dem Gleitring und dem Gegenring aus (auch im Betrieb). Die erfindungsgemäße Getriebeanordnung ist einfach zu montieren. Eine Gleitringdichtung ist wenig verschleißanfällig und hat dementsprechend hohe Standzeiten. Die Gleitringdichtung kann den Ölaustritt aus dem Getrieberaum in den Motorraum durch die Wellendurchgangsöffnung hindurch verhindern. Auch das Einströmen des im Verdichterblock zu verdichtenden Gases in den Motorraum kann durch die Gleitringdichtung verhindert werden, so dass der Motorraum insbesondere nicht unter Druck steht. Insbesondere kann beim Abschalten eines Schraubenverdichters der Verdichtungsraum und der Getrieberaum auf eine Entlüftung verzichtet werden und der Druck im Verdichtungsraum und Getrieberaum aufrechterhalten werden.

Ein weiterer Vorteil der Erfindung ist die einfache Schmierung des getriebeseitigen Antriebslagers durch das im Getrieberaum vorhandene Öl. Durch die erfindungsgemäße Getriebeanordnung mit einem Gehäuse mit einem Antriebsgehäuseabschnitt und einem Verdichtergehäuseabschnitt kann das aus dem ölgeschmierten Verdichterblock in den Getrieberaum austretende Schmieröl zur Schmierung der Getriebestufe und zur Schmierung des getriebeseitigen Antriebslagers genutzt werden. Denn durch die Anordnung des getriebeseitigen Antriebslagers zwischen der Wellendichtung und dem Antriebszahnrad kann dieses Antriebslager auf der dem Antriebszahnrad zugewandten Seite mit dem im Getrieberaum vorhandenen Öl in Kontakt kommen und auf diese Weise ohne zusätzliche konstruktive Maßnahme geschmiert werden. Dadurch ist insbesondere keine separate Lagerschmierung für das getriebeseitige Antriebslager notwendig, insbesondere keine Fettschmierung. Eine Ölschmierung des getriebeseitigen Antriebslagers wird ohne eine zusätzliche Schmiervorrichtung erreicht.

Neben den genannten Vorteilen der Erfindung kann durch die erfindungsgemäße Anordnung des getriebeseitigen Antriebslagers (A-seitiges Lager) außerdem ein größerer Abstand von einem typischerweise am anderen Wellenende der Antriebswelle angeordneten antriebsseitigen Antriebslager (B-seitiges Antriebslager) erreicht werden, wodurch eine Schiefstellung bzw. Exzentrizität der Antriebswelle relativ zum Gehäuse (etwas) reduziert werden kann. Die Verwendung einer Gleitringdichtung wird dadurch begünstigt, da eine geringere Schiefstellung der Antriebswelle einen idealerweise planaren Kontakt zwischen dem Gegenring und dem Gleitring fördert. Umgekehrt können bei gleichbleibender Exzentrizität durch die erfindungsgemäße Anordnung des getriebeseitigen Antriebslagers größere Fertigungstoleranzen zugelassen werden.

Insbesondere wird der Gegenring durch die axiale und radial Festlegung relativ zum Antriebsgehäuseabschnitt endgültig (axial und radial) positioniert. Der Gegenring ist vorzugsweise auch in Umfangsrichtung festgelegt, insbesondere gegen Verdrehung relativ zum Antriebsgehäuseabschnitt gesichert. Der Gegenring kann formschlüssig gegen Verdrehen gesichert sein. Unter einer Festlegung relativ zum Antriebsgehäuseabschnitt kann eine sich im Betrieb der Wellendichtung (im Wesentlichen) nicht verändernde (endgültige) Positionierung verstanden werden. Die Festlegung des Gegenrings kann durch eine lösbare Verbindung mit dem Antriebsgehäuseabschnitt gewährleistet sein, vorzugsweise durch Einsetzen des Gegenrings in eine Ausnehmung, insbesondere in die Wellendurchgangsöffnung, des Antriebsgehäuseabschnitts, wobei sich der Gegenring (mittelbar oder unmittelbar) am Antriebsgehäuseabschnitt (axial und radial) abstützt. Der Gegenrings kann (mittelbar) über Dichtungen, beispielsweise im eingebauten Zustand (geringfügig) elastisch verformbare Dichtungsringe, axial und/oder radial am Antriebsgehäuseabschnitt anliegen.. Der Gleitring wird insbesondere unabhängig vom Gegenring (mittelbar) durch die Antriebswelle positioniert. Im Betrieb der Gleitringdichtung können der Gleitring und der Gegenring gegeneinander gleiten (selbstverständlich ohne eine Klemmung bewirkende Axialkraft). Die Wellendurchgangsöffnung ist vorzugsweise als Durchgangsbohrung (Wellendurchgangsbohrung) ausgeführt. Das Gehäuse kann neben dem Antriebsgehäuseabschnitt und dem Verdichtergehäuseabschnitt, die jeweils ein- oder mehrteilig ausgeführt sein können, weitere Gehäuseabschnitte umfassen. Der Antriebsgehäuseabschnitt kann mit einem Motorgehäuse verbunden sein, das den Motorraum ausbildet und den Antriebsmotor aufnimmt.

In einer Ausführungsform vergrößert sich der Außendurchmesser der Antriebswelle von einem gegenüber dem Gegenring angeordneten Gegenringabschnitt der Antriebswelle bis zu einem im Getrieberaum angeordneten getriebeseitigen Wellenendabschnitt der Antriebswelle hin nicht. Vorzugsweise verringert sich der Außendurchmesser der Antriebswelle von einem gegenüber dem Gegenring angeordneten Gegenringabschnitt der Antriebswelle bis zu einem im Getrieberaum angeordneten getriebeseitigen Wellenendabschnitt der Antriebswelle hin. Insbesondere kann die Antriebswelle einen oder mehrere abgestufte Wellenabsätze und/oder einen kegelförmigen (sich zum Getrieberaum hin verjüngenden) getriebeseitigen Wellenendabschnitt ausbilden. Dadurch kann gewährleistet werden, dass der Gegenring, der Gleitring (ggf. inklusive einer Gleitringbuchse) und/oder das getriebeseitige Antriebslager von der Seite des Getrieberaums her montiert, insbesondere über die Antriebswelle geschoben bzw. auf die Antriebswelle aufgeschoben werden können. Es ist vorteilhaft, die Wellendichtung (ganz oder teilweise) vor dem getriebeseitigen Antriebslager vom Getrieberaum her montieren zu können, insbesondere bevor das getriebeseitige Antriebslager montiert wird. Erst durch die Montage des getriebeseitigen Antriebslagers wird die (endgültige) Position der Antriebswelle relativ zum Antriebsgehäuseabschnitt festgelegt.

In einer weiteren Ausführungsform weist die Gleitringdichtung eine, vorzugsweise vollständig, auf die Antriebswelle aufschiebbare, vorzugsweise ringförmige, Gleitringbuchse auf, die den Gleitring trägt. Durch eine Gleitringbuchse ist die Vormontage des Gleitrings auf der Gleitringbuchse als Gleitring-Baugruppe möglich, die insbesondere als Einheit auf der Antriebswelle montiert werden kann. Vorzugsweise ist die Gleitringbuchse beidseitig offen bzw. ringförmig ausgeführt, insbesondere nicht als einseitig geschlossene Hülse. Unter einer vollständigen Aufschiebbarkeit der Gleitringbuchse kann das Aufschieben auf die Antriebswelle über die gesamte Länge der Gleitringbuchse verstanden werden, insbesondere so, dass auf dem (verbleibenden) getriebeseitigen Wellenendabschnitt ein Lagerinnenring des getriebeseitigen Antriebslagers und/oder ein Antriebszahnrad (unmittelbar) auf der Antriebswelle montierbar ist.

In einer möglichen Ausführungsform liegt die Gleitringbuchse antriebseitig an einem Wellenabsatz der Antriebswelle an. Der Wellenabsatz springt insbesondere gegenüber einem gegenüber dem Gegenring angeordneten Gegenringabschnitt der Antriebswelle zurück. Dadurch wird die antriebsseitige axiale Positionierung der Gleitringbuchse bzw. des Gleitrings auf der Antriebswelle definiert.

In einer möglichen Ausführungsform stützt sich die Gleitringbuchse getriebeseitig (mittelbar oder unmittelbar) an einem Lagerinnenring des getriebeseitigen Antriebslagers ab. Insbesondere liegt die Gleitringbuchse an einem Lagerinnenring des getriebeseitigen Antriebslagers an. Dadurch wird die getriebeseitige axiale Positionierung der Gleitringbuchse bzw. des Gleitrings auf der Antriebswelle definiert. Insbesondere stützt sich die zwischen dem Gleitring und dem Gegenring wirkende Dichtkraft (über die Gleitringbuchse) gegen den Lagerinnenring des getriebeseitigen Antriebslagers ab. In einer bevorzugten Ausführungsform liegt die Gleitringbuchse antriebseitig an einem Wellenabsatz der Antriebswelle und getriebeseitig an einem fest auf der Antriebswelle montierten Lagerinnenring an.

Vorzugsweise ist das getriebeseitige Antriebslager, bzw. dessen Lagerinnenring, unmittelbar auf der Antriebswelle, d.h. auf der Außenumfangsfläche der Antriebswelle, montiert. Dadurch können zwischengeordnete Elemente wie Hülsen oder Buchsen entfallen. Dadurch können geringere Toleranzen erreicht oder größere Fertigungstoleranzen des Gehäuses zugelassen werden. Insbesondere kann die Schiefstellung der Antriebswelle relativ zum Gehäuse (etwas) reduziert werden.

In einer weiteren Ausführungsform ist der Gleitring gegenüber der Gleitringbuchse axial vorgespannt, vorzugsweise durch mindestens ein zwischen der Gleitringbuchse und dem Gleitring in einer Federaufnahme angeordnetes Federelement. Es können mehrere Federelemente (gleichmäßig) über den Umfang des Gleitrings verteilt angeordnet sein. Insbesondere sind die Federelemente im eingebauten Zustand der Gleitringdichtung vorgespannt, so dass der Gleitring an den Gegenring angedrückt wird (selbstverständlich ohne festgeklemmt zu werden), um eine wirksame Abdichtung zu gewährleisten.

In einer weiteren Ausführungsform ist der Gleitring relativ zur Gleitringaufnahmebuchse axial verschieblich und verdrehsicher angeordnet. Zur Verdrehsicherung greift vorzugsweise ein sich axial erstreckendes Sicherungselement in eine sich axial erstreckende Führungsausnehmung ein. Durch diese Konstruktion wird eine verdrehsichere (in Umfangsrichtung der Antriebswelle) Anordnung des Gleitrings bei axialer Verschieblichkeit (aufgrund elastischer Federkräfte) erreicht.

In einer weiteren Ausführungsform weist die Antriebswelle einen Formschlussabschnitt mit nicht-rotationssymmetrischem Querschnitt auf, der insbesondere als abgeflachter Bereich der Außenumgangsfläche der Antriebswelle ausgebildet ist. Insbesondere wirkt ein in den Außenumfang der Antriebswelle eingreifender nach innen vorspringender Bereich der Innenumfangsfläche der Gleitringbuchse mit dem Formschlussabschnitt als Verdrehsicherung zusammen. Die Kontur der Innenumfangsfläche kann als gegenüber dem Innenumfang der Gleitringbuchse nach innen (zur Achse der Antriebswelle hin) vorspringender nasenförmiger Bereich ausgebildet sein. Der Formschluss (in Umfangsrichtung) bewirkt eine Verdrehsicherung der Gleitringbuchse (und des Gleitrings) in Umfangsrichtung relativ zur Antriebswelle.

In einer weiteren Ausführungsform weisen die Gleitringbuchse und/oder der Gleitring mindestens eine Befestigungseinrichtung, vorzugsweise Gewindebohrung, zur lösbaren axialen Verbindung, vorzugsweise Verschraubung, der Gleitringbuchse und des Gleitrings miteinander zum Zweck der Montage, Demontage und des Transports auf. Die Gleitringbuchse und der Gleitring können zum Zweck der Montage, Demontage und des Transports als Gleitring-Baugruppe miteinander verbunden sein, insbesondere im gegeneinander vorgespannten Zustand. Die Befestigungseinrichtung kann eine Gewindebohrung und eine Durchgangsbohrung umfassen, wobei die (axiale) Durchgangsbohrung vorzugsweise in einem (radialen) Buchsenvorsprung und die (axiale) Gewindebohrung im Gleitring vorgesehen ist. Zur (lösbaren) Befestigung des Gleitrings an der Gleitringbuche kann eine (durch die Durchgangsbohrung hindurch geführte) Fixierungsschraube den Gleitring gegen die Gleitringbuchse vorspannen.

In einer weiteren Ausführungsform ist ein Lageraußenring des getriebeseitigen Antriebslagers in einem Lagerflansch aufgenommen, vorzugsweise in den Lagerflansch eingeklebt. Der Lageraußenring kann, bevorzugt inklusive der Wälzkörper (im Käfig), im Lagerflansch vormontiert sein. Insbesondere ist bzw. wird der Lagerflansch getriebeseitig am Antriebsgehäuseabschnitt befestigt, vorzugsweise festgeschraubt. Der Lagerflansch ist vorzugsweise ringförmig ausgebildet. Insbesondere weist der Lagerflansch eine zentrale Ausnehmung auf, in der das getriebeseitige Antriebslager angeordnet ist. Der Durchtritt von Schmieröl in den Getrieberaum hinein bzw. aus dem Getrieberaum heraus ist durch das Antriebslager, und somit durch die Ausnehmung hindurch, möglich. Insbesondere ist der Lagerflansch so ausgeführt, dass das getriebeseitige Antriebslager (bis auf einen äußeren seitlichen Bereich des Lageraußenrings) vom Getrieberaum her (im Wesentlichen) frei zugänglich ist bzw. nicht (vollständig) abgeschirmt wird. Dadurch ist ein Kontakt mit im Getrieberaum vorhandenem Schmieröl bzw. ein Abströmen von Schmieröl aus dem Antriebslager in den Getrieberaum möglich.

In einer weiteren Ausführungsform weist das Gehäuse mindestens eine Ölzuführung in den Aufnahmeraum auf, insbesondere zur Schmierung der Wellendichtung und/oder des getriebeseitigen Antriebslagers. Vorzugsweise ist in einer Aufnahmebohrung des Antriebsgehäuseabschnitts ein Ölzuführring mit mindestens einer Düsenbohrung angeordnet. Die Ölzuführung kann mindestens einen Ölzuführungkanal umfassen, der im Antriebsgehäuseabschnitt ausgeführt, insbesondere gebohrt ist. Durch eine Ölzuführung in den Aufnahmeraum kann ein definiertes Druckgefälle vom Aufnahmeraum hin zum Getrieberaum erzielt werden. Dadurch wird die Schmierung (Durchströmung) des getriebeseitigen Antriebslagers mit Öl gefördert, insbesondere eine Ölschmierung mit durch das Druckgefälle definierter (Haupt-) Strömungsrichtung. Außerdem kann durch eine Zuführung von Schmieröl in den Aufnahmeraum die Gleitringdichtung geschmiert und insbesondere deren Dichtwirkung erhöht werden.

Die genannte Aufgabe wird weiterhin insbesondere gelöst durch einen Verdichter, insbesondere Schraubenverdichter, insbesondere zur Drucklufterzeugung, der eine erfindungsgemäße Getriebeanordnung umfasst.

Die genannte Aufgabe wird weiterhin insbesondere gelöst durch ein Verfahren zur Montage einer Getriebeanordnung, insbesondere einer erfindungsgemäßen Getriebeanordnung, zur Verbindung eines Antriebsmotors und eines ölgeschmierten Verdichterblocks, insbesondere eines Schraubenverdichters, umfassend die folgenden Schritte:
- Aufschieben eines Gleitrings vom getriebeseitigen Wellenendabschnitt einer Antriebswelle des Antriebsmotors her auf die Antriebswelle in einen durch einen Antriebsgehäuseabschnitt gebildeten Aufnahmeraum hin zu einem relativ zum Antriebsgehäuseabschnitt axial und radial festgelegten Gegenring,
   um eine als Gleitringdichtung ausgebildete Wellendichtung zur Abdichtung einer in dem Antriebsgehäuseabschnitt ausgebildeten Wellendurchgangsöffnung für die Antriebswelle gegen Ölaustritt aus einem Getrieberaum in einen Motorraum herzustellen,
- Verdrehsichere Anordnung des Gleitrings relativ zur Antriebswelle;
- Montieren eines getriebeseitigen Antriebslagers vom getriebeseitigen Wellenendabschnitt der Antriebswelle her auf der Antriebswelle in dem Aufnahmeraum des Antriebsgehäuseabschnitts;
- Montieren eines Antriebszahnrads vom getriebeseitigen Wellenendabschnitt der Antriebswelle her auf der Antriebswelle.

Durch das erfindungsgemäße Verfahren kann eine Wellendichtung ohne einen zusätzlichen Arbeitsschritt der Festlegung der radialen Position der (gesamten) Wellendichtung relativ zum Gehäuse einfach montiert werden. Der Gleitring ist insbesondere relativ zur Antriebswelle zentriert, während der Gegenring relativ zum Antriebsgehäuseabschnitt des Gehäuses axial und radial festgelegt ist. Die Wellendichtung wird insbesondere montiert, bevor die Antriebswelle (endgültig) gelagert ist, d.h. in ihrer Position relativ zum Gehäuse (endgültig) festgelegt ist. Das Montageverfahren führt zu einer Getriebeanordnung, die eine möglichst einfache Schmierung des getriebeseitigen Antriebslagers gewährleistet. Durch die Verwendung einer Gleitringdichtung wird eine zuverlässige Abdichtung der Antriebswelle mit langer Lebensdauer erreicht. Im Übrigen hat das Verfahren ähnliche Vorteile wie sie bereits in Verbindung mit der erfindungsgemäßen Getriebeanordnung beschrieben wurden.

Insbesondere wird zuerst die Gleitringdichtung und anschließend das getriebeseitige Antriebslager (auf der Antriebswelle) montiert. Vorzugsweise wird der Lagerinnenring des getriebeseitigen Antriebslagers durch Aufpressen oder Aufschrumpfen auf der Antriebswelle montiert, wobei insbesondere eine Gleitringbuchse zu einem Wellenabsatz hin geschoben wird. Das Verfahren kann einige oder alle verfahrenstechnischen Merkmale umfassen, die im Zusammenhang mit der Getriebeanordnung beschrieben sind.

Eine Ausführungsform des Verfahrens umfasst das Montieren des Gegenrings durch ein axiales und radiales Festlegen relativ zum Antriebsgehäuseabschnitt, während die Antriebswelle einseitig durch ein antriebsseitiges Antriebslager gelagert ist, insbesondere nachdem der Gegenring vom getriebeseitigen Wellenendabschnitt einer Antriebswelle des Antriebsmotors her zur Wellendurchgangsöffnung geführt wurde.

Eine weitere Ausführungsform des Verfahrens umfasst das Aufschieben einer vormontierten Gleitring-Baugruppe umfassend den Gleitring und eine Gleitringbuchse, die den Gleitring trägt, wobei vorzugsweise der Gleitring lösbar an der Gleitringbuchse befestigt ist, insbesondere in einem gegenüber der Gleitringbuchse axial vorgespannten Zustand. Die Gleitring-Baugruppe weist insbesondere eine Befestigungsvorrichtung zur lösbaren axialen Verbindung, vorzugsweise Verschraubung, der Gleitringbuchse und des Gleitrings miteinander zum Zweck der Montage, Demontage und des Transports auf. Vorzugsweise sind in der Gleitringbuchse und/oder im Gleitring Gewindebohrungen vorgesehen, wobei der Gleitring und die Gleitringbuchse zur Montage über Fixierungsschrauben miteinander verbunden sind, die nach der Montage gelöst und entfernt bzw. für die Demontage und den Transport angebracht werden.

Eine weitere Ausführungsform des Verfahrens umfasst das Befestigen eines Lagerflansches am Antriebsgehäuseabschnitt mit einem darin vormontierten, vorzugsweise eingeklebten, Lageraußenring des getriebeseitigen Antriebslagers, vorzugsweise inklusive Wälzkörpern (im Käfig).

Insbesondere kann die Antriebswelle vor der Montage der Gleitringdichtung in einem Motorgehäuse provisorisch vormontiert sein. Zur Montage der Gleitringdichtung ragt die Antriebswelle vorzugsweise durch den Antriebsgehäuseabschnitt hindurch. Insbesondere ist bei dem Montageverfahren die Antriebswelle zum Zeitpunkt der Montage der Wellendichtung (noch) nicht vollständig (endgültig) gelagert. Typischerweise ist die Antriebswelle vor und während der Montage der Wellendichtung (nur) durch das (zuvor montierte) antriebseitige Antriebslager gelagert. Insbesondere kann die Antriebswelle an einer Innenfläche der Wellendurchgangsöffnung aufliegen bis das getriebeseitige Antriebslager (vollständig) montiert ist. Eine Zentrierung bzw. Ausrichtung der Wellendichtung wird erst durch die Montage des getriebeseitigen Antriebslagers erreicht.

Ausführungsbeispiele der Erfindung werden nachfolgend anhand der Zeichnungen näher erläutert. Hierbei zeigen:
- Figur 1A: eine schematische Übersichtsdarstellung einer erfindungsgemäßen Getriebeanordnung mit Darstellung des antriebseitigen Antriebslagers der Antriebswelle;
- Figur 1B: eine Ansicht eines Schraubenverdichters mit einer erfindungsgemäßen Getriebeanordnung in einer ausschnittsweisen Schnittdarstellung;
- Figur 2: eine Schnittdarstellung der Ausführungsform der Getriebeanordnung in einer Detailansicht des Getrieberaums;
- Figur 3: eine Schnittdarstellung der Ausführungsform der Getriebeanordnung nach Figur 2 in einer vergrößerten Detailansicht des Getrieberaums;
- Figur 4: eine Schnittdarstellung der Ausführungsform der Getriebeanordnung nach Figur 2 in einer Detailansicht der Gleitringdichtung;
- Figur 5: eine weitere Schnittdarstellung der Ausführungsform der Getriebeanordnung nach Figur 2 in einer Detailansicht der Gleitringdichtung;
- Figur 6: eine Schnittdarstellung der Ausführungsform der Getriebeanordnung nach Figur 2 in einem Schnitt entlang der Linie C-C gemäß Figur 4.

In der nachfolgenden Beschreibung der Erfindung werden für gleiche und gleich wirkende Elemente dieselben Bezugszeichen verwendet.

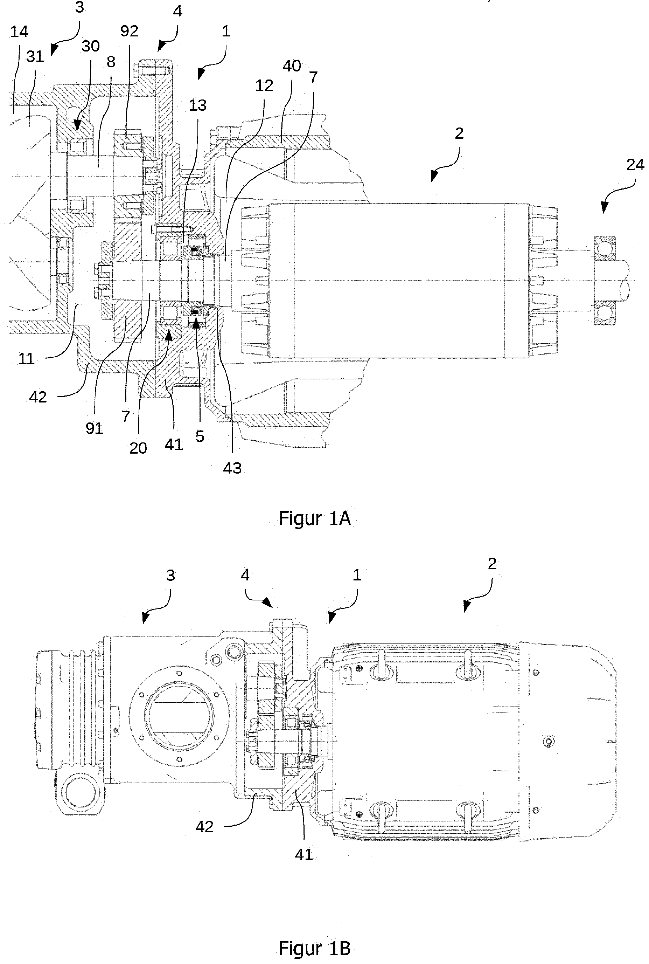

Die Figuren 1A und 1B zeigen schematische Übersichtsdarstellungen, in denen einzelne Komponenten einer erfindungsgemäßen Getriebeanordnung 1 dargestellt sind. Figur 1A zeigt den Verdichterblock 3, die Getriebeanordnung 1 und das Motorgehäuse 40 mit dem Antriebsmotor 2 in einer Schnittansicht. Figur 1B zeigt einen Schraubenverdichter mit einer solchen Getriebeanordnung 1. Ein Antriebsmotor 2, hier ein Elektromotor, mit einer Antriebswelle 7 treibt über ein Zahnradgetriebe mit einer Getriebestufe 9 einen Verdichterblock 3 an, mit dem Gas, insbesondere Luft, verdichtet wird. Die Antriebswelle 7 ist über ein antriebsseitiges Antriebslager 24 (B-seitiges Antriebslager) und ein getriebeseitiges Antriebslager 20 (A-seitiges Antriebslager) beidseitig gelagert und verläuft durch den Motorraum 12, der von einem Antriebsgehäuse umschlossen wird. In dem Antriebsgehäuseabschnitt 41, der als Motorflansch ausgebildet ist, ist eine Wellendurchgangsöffnung 43 ausgeführt, durch die hindurch sich die Antriebswelle 7 in den Getrieberaum 11 hinein erstreckt. Das Gehäuse 4 umfasst einen Antriebsgehäuseabschnitt 41 und einen Verdichtergehäuseabschnitt 42, die über Flansche miteinander verbunden, nämlich verschraubt, sind. Der Antriebsgehäuseabschnitt 41 und der Verdichtergehäuseabschnitt 42 sind in ihrer Verbindungsfläche vorzugsweise durch einen O-Ring, alternativ durch eine Flachdichtung oder eine flüssige Flächendichtung, abgedichtet. Der Antriebsgehäuseabschnitt 41 und der Verdichtergehäuseabschnitt 42 bilden miteinander ein Getriebegehäuse, das den Getrieberaum 11 umschließt. Das Motorgehäuse 40 nimmt den Antriebsmotor 2 auf und ist über die Motorgehäuseverschraubung 49 mit dem Antriebsgehäuseabschnitt 41 verbunden.

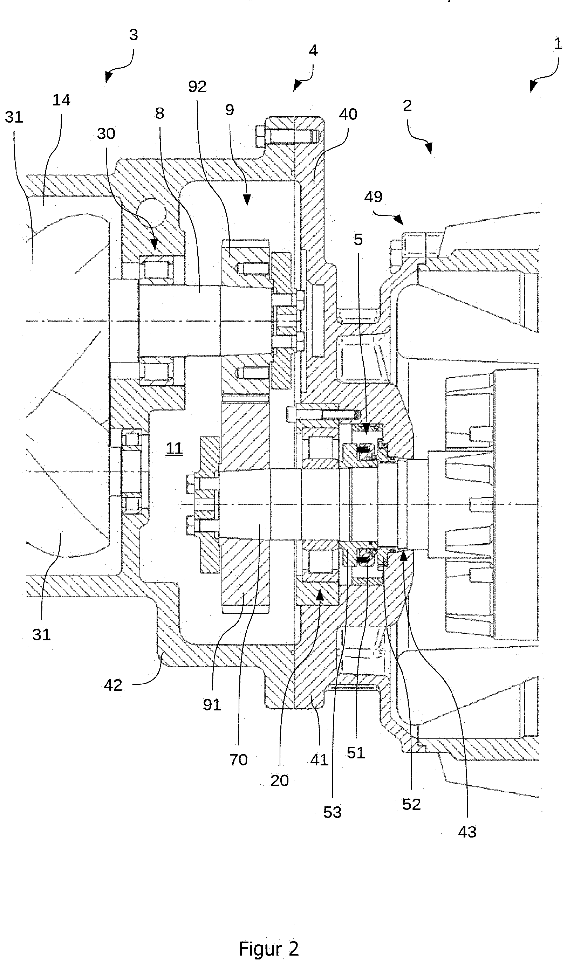

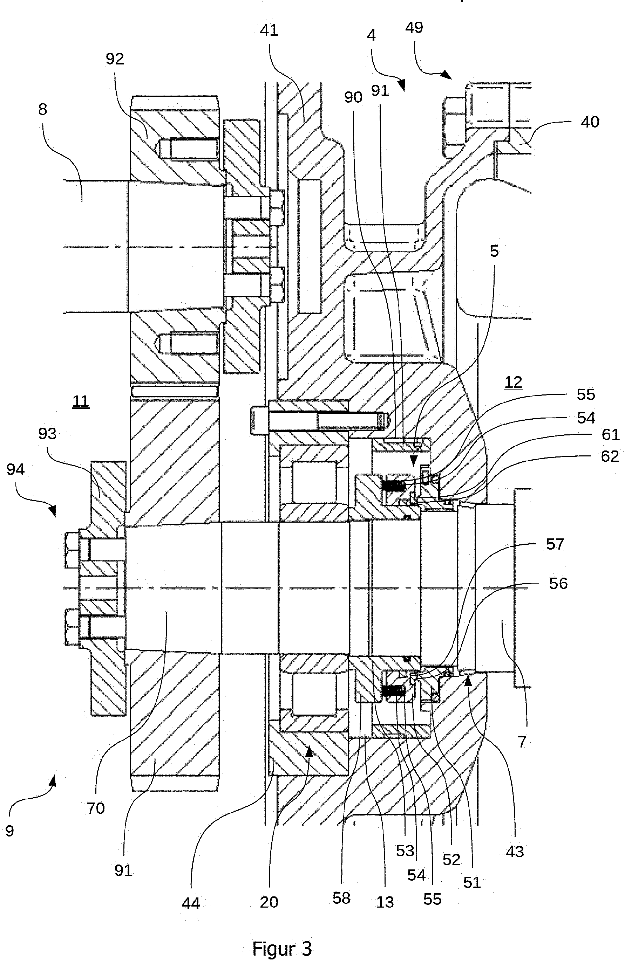

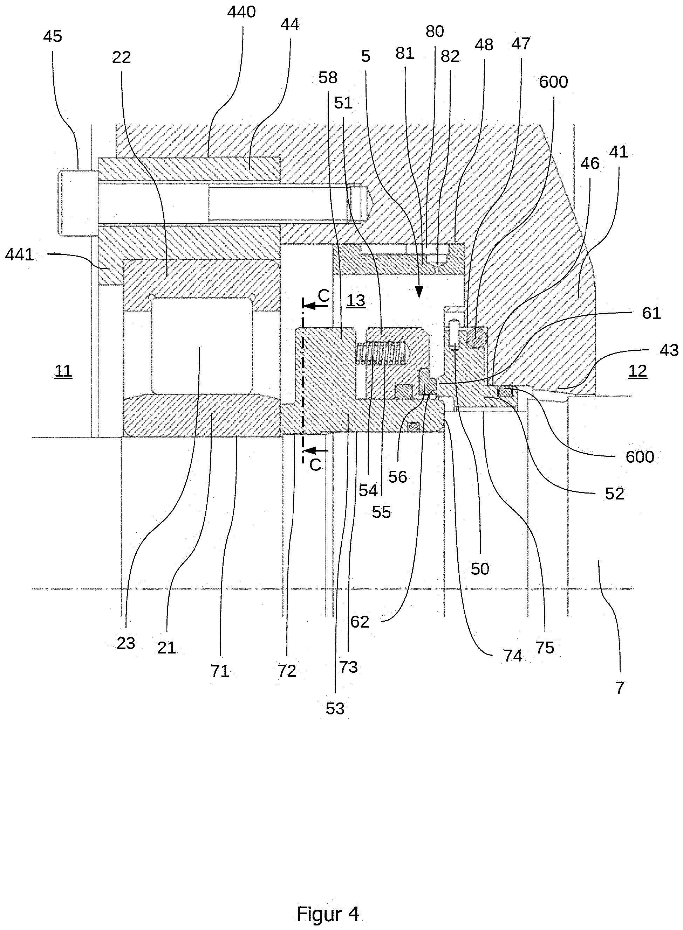

In den Figuren 2 bis 5 ist jeweils dieselbe Ausführungsform der erfindungsgemäßen Getriebeanordnung 1 in verschiedenen Detailansichten dargestellt.

In dem Verdichtungsraum 14 (siehe Figur 2) des Verdichterblocks 3 ist der Verdichterrotor 31 gelagert, wobei nur das saugseitige Verdichterlager 30 dargestellt ist. Der Verdichtungsraum 14 ist nicht gegenüber dem Getrieberaum 11 abgedichtet, sondern fluidisch mit diesem verbunden. In den Verdichtungsraum 14 eingespritztes Öl kann in den Getrieberaum 11 gelangen.

Der Verdichterblock 3 wird durch die Abtriebswelle 8 angetrieben. Im Getrieberaum 11 ist ein Zahnradgetriebe mit einer Getriebestufe 9 angeordnet, die ein mit der Antriebswelle 7 verbundenes Antriebszahnrad 91 und ein mit der Abtriebswelle 8 verbundenes Abtriebszahnrad 92 umfasst, die miteinander im Eingriff sind. Diese Getriebestufe 9 wird hauptsächlich über (nicht gezeigte) Ölzuführungen zu den Zahnrädern 91, 92 und insbesondere auch über die Ölzuführung 80 geschmiert, die die Wellendichtung 5 mit Schmieröl versorgt. Das Schmieröl strömt durch das getriebeseitige Antriebslager 20 hindurch aus dem Aufnahmerum 13 in den Getrieberaum 11. In gewissem Maß kann ein Ölaustausch zwischen dem Getrieberaum 11 und dem Verdichtungsraum 14 stattfinden.

Der Antriebsgehäuseabschnitt 41 bildet einen Aufnahmeraum 13 aus, in dem das getriebeseitige Antriebslager 20 und eine Wellendichtung 5 angeordnet sind. Der Lagerinnenring 21 ist fest mit der Antriebswelle 7 verbunden, nämlich aufgepresst bzw. aufgeschrumpft. Der Lageraußenring 22 ist in einer im Lagerflansch 44 ausgebildeten Lageraufnahme 440 aufgenommen und stützt sich gegen einen Lagerabsatz 441 ab. Der Lagerflansch 44 ist über eine Schraubverbindung 45 am Antriebsgehäuseabschnitt 41 befestigt. Zwischen dem Lagerinnenring 21 und dem Lageraußenring 22 sind die Wälzkörper 23 angeordnet, die in einem Käfig (nicht dargestellt) geführt werden. Der Lageraußenring 22 ist in dem Lagerflansch 44 vormontiert, nämlich beispielsweise eingepresst, eingeklebt oder eingeschrumpft, so dass er gemeinsam mit den Wälzkörpern 23 zusammen mit dem Lagerflansch 44 vom Getrieberaum 11 her am Antriebsgehäuseabschnitt 41 montierbar ist.

Die Wellendichtung 5 ist als Gleitringdichtung ausgeführt, die einen relativ zum Antriebsgehäuseabschnitt 41 axial und radial festgelegten Gegenring 52 und einen mit der Antriebswelle 7 umlaufenden Gleitring 51 umfasst, die sich entlang einer gleitringseitigen Dichtfläche 61 und einer gegenringseitigen Dichtfläche 62 berühren. Der Gegenring 52 stützt sich über je eine ringförmige Dichtung, hier zwei O-Ringe 600, axial und radial im Antriebsgehäuseabschnitt 41 ab. Die Gleitringdichtung 5 bewirkt eine Abdichtung der Wellendurchgangsöffnung 43 gegen Ölaustritt aus dem Getrieberaum 11 in den Motorraum 12. Der Gegenring 52 ist direkt in die Wellendurchgangsöffnung 43 bzw. eine Aufnahmebohrung des Antriebsgehäuseabschnitts 41 eingesetzt und formschlüssig gegen Verdrehung gesichert. Beispielsweise kann der Gegenring 52 durch einen radialen Vorsprung, wie einen sich radial erstreckenden Sicherungsstift 50, der in eine korrespondierende Aufnahmeöffnung im Antriebsgehäuseabschnitt 41 eingreift, in Umfangsrichtung festgelegt sein. Der Gleitring 51 ist axial verschieblich und verdrehsicher auf der Gleitringbuchse 53 angeordnet und weist einen in eine Aufnahmenut 57 eingeklebten Kohlering 56 auf, dessen Stirnfläche die gleitringseitige Dichtfläche 61 bildet. Mehrere Federelemente 54 sind über den Umfang des Gleitrings 51 bzw. des Buchsenvorsprungs 58 der Gleitringbuchse 53 verteilt angeordnet. Die Federelemente 54 sind jeweils in einer als Bohrung ausgeführten Federaufnahme 55 axial geführt und im eingebauten Zustand der Gleitringdichtung (auf Druck) vorgespannt, so dass sie eine axiale Dichtkraft auf den Gegenring 52 bewirken. Zwischen dem Gleitring 51 und dem Buchsenvorsprung 58 erstreckt sich vorzugsweise axial ein Sicherungselement, z.B. ein Sicherungsstift, der in eine sich axial erstreckende Führungsausnehmung eingreift (nicht dargestellt), um eine Verdrehung des Gleitrings relativ zu Gleitringbuchse 53 zu blockieren.

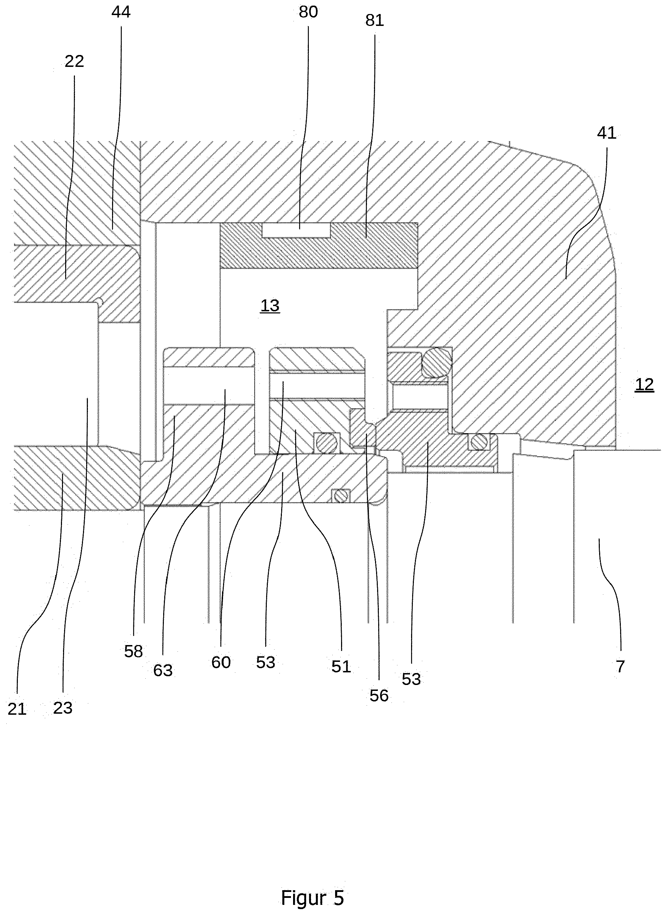

In der Schnittansicht in Figur 5 sind über den Umfang verteilte Gewindebohrungen 60 und Durchgangsbohrungen 63 sichtbar, über die der Gleitring 51 und die Gleitringbuchse 53 vor der Montage als Gleitring-Baugruppe über Fixierungsschrauben gegeneinander vorgespannt werden können, um gemeinsam auf der Antriebswelle 7 montiert, oder demontiert bzw. transportiert, werden zu können.

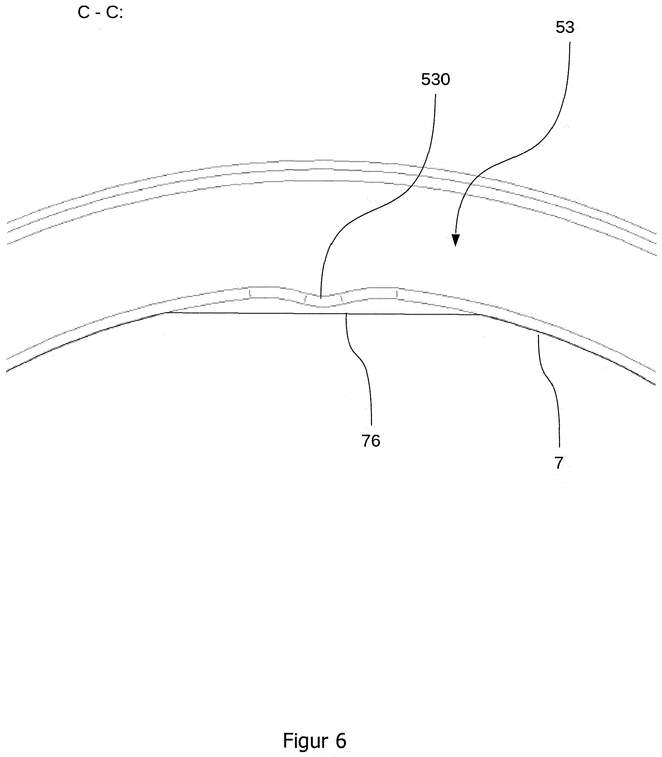

Die Gleitringbuchse 53 ist auf die Antriebswelle 7 vom Getrieberaum 11 her über ihre gesamte Länge (vollständig) aufgeschoben und liegt antriebseitig an dem Wellenabsatz 74 und getriebeseitig am Lagerinnenring 21 des getriebeseitigen Antriebslagers 20 an. Die Gleitringbuchse 53 ist durch Formschluss mit der Antriebswelle 7 gegen Verdrehung gesichert. In Figur 6 ist der Formschluss, der durch eine Wellenabflachung 76 im Formschlussabschnitt 72 der Antriebswelle 7 und eine in den Außenumfang der Antriebswelle 7 eingreifenden nach innen vorspringenden Bereich 530, hier nasenförmig, der Innenumfangsfläche der Gleitringbuchse 53, die mit der Wellenabflachung 76 formschlüssig als Verdrehsicherung zusammenwirkt, dargestellt. Die Kontur der Innenumfangsfläche kann als gegenüber dem Innenumfang der Gleitringbuchse nach innen (zur Achse der Antriebswelle hin) vorspringender Bereich, vorzugsweise nasenförmig, ausgebildet sein.

Die Antriebswelle 7 weist ausgehend von der Wellendurchgangsöffnung 43 in Richtung des Getrieberaums 11 einen sich verringernden Querschnitt auf. Von einem dem Gegenring 52 gegenüberliegenden Gegenringabschnitt 75 springt die Antriebswelle 7 über den Wellenabsatz 74 auf einen Buchsenabschnitt 73 und weiter auf den Formschlussabschnitt 72 zurück, der die bereichsweise Wellenabflachung 76 ausbildet. Nach dem Lagerabschnitt 71, auf dem der Lagerinnenring 21 sitzt, schließt sich ein sich kegelförmig verjüngender getriebeseitiger Wellenendabschnitt 70 an, auf dem das Antriebszahnrad 91 über eine stirnseitig über die Verschraubung 94 befestigte Wellendplatte 93 festgespannt ist.

Der Antriebsgehäuseabschnitt 41 bildet ausgehend von der Wellendurchgangsöffnung 43 in Richtung des Getrieberaum 11 mehrere Aufnahmebohrungen 46, 47, 48 mit zunehmendem Durchmesser auf. In den ersten und zweiten Aufnahmebohrungen 46, 47 ist der Gegenring 52 über O-Ringe 600 in den Antriebsgehäuseabschnitt 41 eingesetzt, wobei er mittelbar über einen O-Ring 600 radial und axial festgelegt ist und sich gegen den Antriebsgehäuseabschnitt 41 abstützt. Der in der Aufnahmebohrungen 46 angeordnete O-Ring 600 dichtet die Außenseite des Gegenrings 52 gegenüber der Wellendurchgangsöffnung 43 und weiter gegenüber dem Motorraum 12 ab. Der in eine Ausnehmung in der Innenfläche des Antriebsgehäuseabschnitts 41 radial eingreifende Sicherungsstift 50 sichert den Gegenring 52 gegen eine Verdrehung im Gehäuse 4. Zwischen dem Gegenringabschnitt 75 der Antriebswelle 7 und dem Gegenring 52 besteht ein spaltförmiger Freiraum. In der dritten Aufnahmebohrung 48 ist ein Ölzuführring 81 mit einer Düsenbohrung 82 angeordnet. Der Ölzuführring 81 weist entlang des Außenumfangs eine als Ölzuführnut ausgebildete Ölzuführung 80 auf, die über einen im Gehäuse 4 vorgesehenen Ölzuführungskanal mit Schmieröl versorgt wird. Die ersten bis dritten Aufnahmebohrungen 46, 47, 48 bilden zusammen den Aufnahmeraum 13 zur Aufnahme der Gleitringdichtung 5 und des getriebeseitigen Antriebslagers 20. Typischerweise weist ein öleingespritzter Schraubenverdichter einen primären Ölkreislauf auf, der die Gleitringdichtung 5, die Lager und die Getriebestufe 9 mit Öl versorgt. Eine Schraubenverdichteranlage weist typischerweise einen Ölabscheidebehälter auf, der auch als Ölsammelbehälter bzw. Öltank dient. Aus einem mit dem Ölabscheidebehälter verbundenen Teilkreislauf wird die Ölzuführung 80 mit Öl versorgt und die Gleitringdichtung 5 sowie das getriebeseitige Antriebslager 20 geschmiert. Es ist auch möglich, das saugseitige Verdichterlager 30 über diesen Teilkreislauf zu schmieren.

Im Folgenden wird die Montage der Getriebeanordnung 1 beschrieben. Typischerweise wird der Antriebsmotor 2 mit der Antriebswelle 7 in einem Motorgehäuse (provisorisch, d.h. nicht endgültig) vormontiert, wobei der Antriebsgehäuseabschnitt 41 bereits mit dem Motorgehäuse verbunden ist und die Antriebswelle 7 durch die Wellendurchgangsöffnung 43 hindurchragt. In diesem vormontierten Zustand ist die Antriebswelle 7 zunächst nur einseitig über das antriebseitge Antriebslager 24 gelagert und verläuft schief durch den Antriebsgehäuseabschnitt 41, wobei die Antriebswelle 7 in der Wellendurchgangsöffnung 43 aufliegen kann. Der Gegenring 53 wird nun vom getriebeseitigen Wellenendabschnitt 70 her über die Antriebswelle 7 geschoben und in die erste und zweite Aufnahmebohrung 46, 47 des Antriebsgehäuseabschnitts 41 eingesteckt. Der Gleitring 51 und die Gleitringbuchse 53 werden mit den dazwischen angeordneten Federelementen 54 und der Verdrehsicherung 59 außerhalb des Gehäuses 4 als Gleitring-Baugruppe vormontiert und gemeinsam vom getriebeseitigen Wellenendabschnitt 70 her auf die Antriebswelle 7 bis zum Wellenabsatz 74 aufgeschoben. Die Gleitring-Baugruppe wird über durch die Durchgangsbohrungen 63 hindurchgeführte Fixierungsschrauben mit den Gewindebohrungen 60 des Gleitrings 51 verspannt. Der Lagerinnenring 21 wird vom getriebeseitigen Wellenendabschnitt 70 her auf die Antriebswelle 7 aufgepresst, so dass der Lagerinnenring 21 axial an der Gleitringbuchse 53 anliegt. Als nächstes werden die Fixierungsschrauben entfernt, so dass der Gleitring 51 aufgrund der Vorspannung der Federelemente 54 am Gegenring 52 anliegt. Der zusammen mit den Wälzkörpern 23 im Lagerflansch 44 eingeklebte Lageraußenring 22 wird im vormontierten Zustand über die Schraubverbindung 45 am Antriebsgehäuseabschnitt 41 befestigt. Anschließend wird das Antriebszahnrad 91 auf der Antriebswelle 7 montiert und über die Verschraubung 94 und die Wellenendplatte 93 axial gesichert. Nach Montage des Abtriebszahnrads 92 auf der Abtriebswelle 8 wird der Antriebsgehäuseabschnitt 41 mit dem Verdichtergehäuseabschnitt 42 verbunden, um das Gehäuse 4 zu schließen.

Die Erfindung hat den Vorteil, dass das getriebeseitige Antriebslager 20 durch seine Anordnung auf der dem Getrieberaum 11 zugewandten Seite der Gleitringdichtung 5 ohne zusätzliche Maßnahmen auf einfache Weise durch das im Getrieberaum 11 vorhandene Öl geschmiert werden kann. Zusätzlich stellt sich durch das in den Aufnahmeraum 13 über die Ölzuführung 80 zugeführte Öl ein definiertes Druckgefälle vom Aufnahmeraum 13 durch das getriebeseitige Antriebslager 20 hindurch in den Getrieberaum 11 ein, wodurch das Antriebslager 20 zuverlässig geschmiert wird.

Zusätzlich nutzt die Erfindung den Vorteil von Gleitringdichtungen, dass sich die Dichtflächen 61, 62 (anders als bei einer Lippendichtung) entlang einer radialen Ebene erstrecken bzw. die Flächennormalen der Dichtflächen axial ausgerichtet sind. Ein radialer Versatz (Exzentrizität) zwischen der Antriebswelle 7 und dem Antriebsgehäuseabschnitt 41 wird bei einer Gleitringdichtung 5 zwischen dem Gegenring 52 und dem Gleitring 51 bauartbedingt stets ausgeglichen. Bei einer Lippendichtung kann sich ein radialer Versatz hingegen negativ auf die Dichtfunktion und die Lebensdauer (Verschleiß) auswirken. Eine möglichst planparallele Ausrichtung der Dichtflächen 61, 62 der Gleitringdichtung 5 zueinander ist vorteilhaft. Bei einer auf einer Antriebswelle angebrachten Lippendichtung zentriert sich die gesamte Dichtung bei ausreichendem radialem Spiel relativ zur Antriebswelle. Bei der Gleitringdichtung 5 zentriert sich der Gleitring 51 auf der Antriebswelle 7, während sich der Gegenring 52 unabhängig davon im Antriebsgehäuseabschnitt 41 zentriert. Durch die erfindungsgemäße Getriebeanordnung 1 mit einer Gleitringdichtung 5 wird eine einfach zu montierende und möglichst dauerhaft wirksame Abdichtung der Antriebswelle 7 gewährleistet.

An dieser Stelle sei darauf hingewiesen, dass alle oben beschriebenen Aspekte der Erfindung für sich alleine gesehen und in jeder Kombination, insbesondere die in den Zeichnungen dargestellten Details zur Erfindung gehören. Entsprechendes gilt für die erläuterten Verfahrensschritte. Abänderungen hiervon sind dem Fachmann geläufig.

### Bezugszeichenliste:

- 1: Getriebeanordnung
- 2: Antriebsmotor
- 3: Verdichterblock
- 4: Gehäuse
- 5: Wellendichtung
- 7: Antriebswelle
- 8: Abtriebswelle
- 9: Getriebestufe
- 11: Getrieberaum
- 12: Motorraum
- 13: Aufnahmeraum
- 14: Verdichtungsraum
- 20: getriebeseitiges Antriebslager
- 21: Lagerinnenring
- 22: Lageraußenring
- 23: Wälzkörper
- 24: antriebseitiges Antriebslager
- 30: saugseitiges Verdichterlager
- 31: Verdichterrotor
- 40: Motorgehäuse
- 41: Antriebsgehäuseabschnitt
- 42: Verdichtergehäuseabschnitt
- 43: Wellendurchgangsöffnung
- 44: Lagerflansch
- 45: Schraubverbindung
- 46: erste Aufnahmebohrung
- 47: zweite Aufnahmebohrung
- 48: dritte Aufnahmebohrung
- 49: Motorgehäuseverschraubung
- 50: Sicherungsstift
- 51: Gleitring
- 52: Gegenring
- 53: Gleitringbuchse
- 54: Federelement
- 55: Federaufnahme
- 56: Kohlering
- 57: Aufnahmenut
- 58: Buchsenvorsprung
- 60: Gewindebohrung
- 61: gleitringseitige Dichtfläche
- 62: gegenringseitige Dichtfläche
- 63: Durchgangsbohrung
- 70: getriebeseitiger Wellenendabschnitt
- 71: Lagerabschnitt
- 72: Formschlussabschnitt
- 73: Buchsenabschnitt
- 74: Wellenabsatz
- 75: Gegenringabschnitt
- 76: Wellenabflachung
- 80: Ölzuführung
- 81: Ölzuführring
- 82: Düsenbohrung
- 91: Antriebszahnrad
- 92: Abtriebszahnrad
- 93: Wellenendplatte
- 94: Verschraubung
- 440: Lageraufnahme
- 441: Lagerabsatz
- 530: vorspringender Bereich
- 600: O-Ring

## Patentansprüche

1. Getriebeanordnung (1) zur Verbindung eines Antriebsmotors (2) und eines ölgeschmierten Verdichterblocks (3), insbesondere eines Schraubenverdichters, umfassend
- ein Gehäuse (4), das einen Antriebsgehäuseabschnitt (41) und einen Verdichtergehäuseabschnitt (42) aufweist, die miteinander verbunden sind, wobei das Gehäuse (4) einen Getrieberaum (11) ausbildet, wobei der Antriebsgehäuseabschnitt (41) eine Wellendurchgangsöffnung (43) zwischen einem Motorraum (12) und dem Getrieberaum (11) aufweist,
- eine Antriebswelle (7) des Antriebsmotors (2), die sich vom Motorraum (12) durch die Wellendurchgangsöffnung (43) hindurch in den Getrieberaum (11) hinein erstreckt,
- eine ölgeschmierte Getriebestufe (9), die in dem Getrieberaum (11) angeordnet ist, und die Antriebswelle (7) mit einer Abtriebswelle (8) des Verdichterblocks (3) koppelt, und
- eine Wellendichtung (5) zur Abdichtung der Wellendurchgangsöffnung (43) gegen Ölaustritt aus dem Getrieberaum (11) in den Motorraum (12),
wobei der Antriebsgehäuseabschnitt (41) zwischen der Wellendurchgangsöffnung (43) und dem Getrieberaum (11) einen Aufnahmeraum (13) ausbildet, in dem die Wellendichtung (5) und ein getriebeseitiges Antriebslager (20) der Antriebswelle (7) aufgenommen sind,
wobei das getriebeseitige Antriebslager (20) zwischen der Wellendichtung (5) und einem Antriebszahnrad der Getriebestufe (9) angeordnet ist;
wobei die Wellendichtung (5) als Gleitringdichtung mit einem relativ zur Antriebswelle (7) verdrehsicher angeordneten Gleitring (51) und einem relativ zum Antriebsgehäuseabschnitt (41) axial und radial festgelegten Gegenring (52) ausgeführt ist.

2. Getriebeanordnung (1) nach Anspruch 1,
**dadurch gekennzeichnet, dass** der Außendurchmesser der Antriebswelle (7) sich von einem gegenüber dem Gegenring (52) angeordneten Gegenringabschnitt (75) der Antriebswelle (7) bis zu einem im Getrieberaum (11) angeordneten getriebeseitigen Wellenendabschnitt (70) der Antriebswelle (7) hin nicht vergrößert, insbesondere sich stufenweise verringert.

3. Getriebeanordnung (1) nach Anspruch 1 oder 2,
**dadurch gekennzeichnet, dass** die Gleitringdichtung eine, vorzugsweise vollständig, auf die Antriebswelle (7) aufschiebbare, vorzugsweise ringförmige, Gleitringbuchse (53) aufweist, die den Gleitring (51) trägt.

4. Getriebeanordnung (1) nach Anspruch 3,
**dadurch gekennzeichnet, dass** die Gleitringbuchse (53) antriebseitig an einem Wellenabsatz (74) der Antriebswelle (7) anliegt, der insbesondere gegenüber einem gegenüber dem Gegenring (52) angeordneten Gegenringabschnitt (75) der Antriebswelle (7) zurückspringt.

5. Getriebeanordnung (1) nach Anspruch 3 oder 4,
**dadurch gekennzeichnet, dass** die Gleitringbuchse (53) sich getriebeseitig an einem Lagerinnenring (21) des getriebeseitigen Antriebslagers (20) abstützt, insbesondere an einem Lagerinnenring (21) des getriebeseitigen Antriebslagers (20) anliegt.

6. Getriebeanordnung (1) nach einem der vorherigen Ansprüche,
**dadurch gekennzeichnet, dass** der Gleitring (51) gegenüber der Gleitringbuchse (53) axial vorgespannt ist, vorzugsweise durch mindestens ein zwischen der Gleitringbuchse (53) und dem Gleitring (51) in einer Federaufnahme (55) angeordnetes Federelement (54).

7. Getriebeanordnung (1) nach einem der vorherigen Ansprüche,
**dadurch gekennzeichnet, dass** der Gleitring (51) relativ zur Gleitringaufnahmebuchse (53) axial verschieblich und verdrehsicher angeordnet ist, wobei zur Verdrehsicherung vorzugsweise ein sich axial erstreckendes Sicherungselement (59) in eine sich axial erstreckende Führungsausnehmung (510) eingreift.

8. Getriebeanordnung (1) nach einem der vorherigen Ansprüche,
**dadurch gekennzeichnet, dass** die Antriebswelle (7) einen Formschlussabschnitt (72) mit nicht-rotationssymmetrischem Querschnitt aufweist, der insbesondere als abgeflachter Bereich der Außenumgangsfläche der Antriebswelle (7) ausgebildet ist, wobei insbesondere eine in den Außenumfang der Antriebswelle eingreifender nach innen vorspringender Bereich (530) der Innenumfangsfläche der Gleitringbuchse (53) mit dem Formschlussabschnitt (72) als Verdrehsicherung zusammenwirkt.

9. Getriebeanordnung (1) nach einem der vorherigen Ansprüche,
**dadurch gekennzeichnet, dass** die Gleitringbuchse (53) und/oder der Gleitring (51) mindestens eine Befestigungseinrichtung, vorzugsweise Gewindebohrung (60), zur lösbaren axialen Verbindung, vorzugsweise Verschraubung, der Gleitringbuchse (53) und des Gleitrings (51) miteinander zum Zweck der Montage aufweist.

10. Getriebeanordnung (1) nach einem der vorherigen Ansprüche,
**dadurch gekennzeichnet, dass** ein Lageraußenring (22)des getriebeseitigen Antriebslagers (20) in einem Lagerflansch (44) aufgenommen, vorzugsweise in den Lagerflansch (44) eingeklebt, ist, wobei vorzugsweise der Lagerflansch (44) getriebeseitig am Antriebsgehäuseabschnitt (41) befestigt, vorzugsweise festgeschraubt, ist.

11. Getriebeanordnung (1) nach einem der vorherigen Ansprüche,
**dadurch gekennzeichnet, dass** das Gehäuse (4) mindestens eine Ölzuführung (80) in den Aufnahmeraum (13) aufweist, insbesondere zur Schmierung der Wellendichtung (5) und/oder des getriebeseitigen Antriebslagers (20), wobei vorzugsweise in einer Aufnahmebohrung (48) des Antriebsgehäuseabschnitts (41) ein Ölzuführring (81) mit mindestens einer Düsenbohrung (82) abgeordnet ist.

12. Verdichter, insbesondere Schraubenverdichter, insbesondere zur Drucklufterzeug ung,
**gekennzeichnet durch** eine Getriebeanordnung (1) nach einem der Ansprüche 1 bis 11.

13. Verfahren zur Montage einer Getriebeanordnung, insbesondere einer Getriebeanordnung (1) gemäß einem der Ansprüche 1 bis 11, zur Verbindung eines Antriebsmotors (2) und eines ölgeschmierten Verdichterblocks (3), insbesondere eines Schraubenverdichters, umfassend die folgenden Schritte:
- Aufschieben eines Gleitrings (51) vom getriebeseitigen Wellenendabschnitt (70) einer Antriebswelle (7) des Antriebsmotors (2) her auf die Antriebswelle (7) in einen durch einen Antriebsgehäuseabschnitt (41) gebildeten Aufnahmeraum (13) hin zu einem relativ zum Antriebsgehäuseabschnitt (41) axial und radial festgelegten Gegenring (52),
um eine als Gleitringdichtung ausgebildete Wellendichtung (5) zur Abdichtung einer in dem Antriebsgehäuseabschnitt (41) ausgebildeten Wellendurchgangsöffnung (43) für die Antriebswelle (7) gegen Ölaustritt aus einem Getrieberaum (11) in einen Motorraum (12) herzustellen,
- Verdrehsichere Anordnung des Gleitrings (51) relativ zur Antriebswelle (7);
- Montieren eines getriebeseitigen Antriebslagers (20) vom getriebeseitigen Wellenendabschnitt (70) der Antriebswelle (7) her auf der Antriebswelle (7) in dem Aufnahmeraum (13) des Antriebsgehäuseabschnitts (41);
- Montieren eines Antriebszahnrads (91) vom getriebeseitigen Wellenendabschnitt (70) der Antriebswelle (7) her auf der Antriebswelle (7).

14. Verfahren nach Anspruch 13,
**gekennzeichnet durch**
Montieren des Gegenrings (52) durch eine axiale und radiale Festlegung relativ zum Antriebsgehäuseabschnitt (41), während die Antriebswelle (7) einseitig durch ein antriebsseitiges Antriebslager (24) gelagert ist (41), insbesondere nachdem der Gegenring (52) vom getriebeseitigen Wellenendabschnitt (70) einer Antriebswelle (7) des Antriebsmotors (2) her zur Wellendurchgangsöffnung (43) geführt wurde.

15. Verfahren nach Anspruch 13 oder 14,
**gekennzeichnet durch**
Aufschieben einer vormontierten Gleitring-Baugruppe umfassend den Gleitring (51) und eine Gleitringbuchse (53), die den Gleitring (51) trägt, wobei vorzugsweise der Gleitring (51) an der Gleitringbuchse (53) lösbar befestigt ist, insbesondere in einem gegenüber der Gleitringbuchse axial vorgespannten Zustand.

16. Verfahren nach einem der Ansprüche 13 bis 15,
**gekennzeichnet durch**
Befestigen eines Lagerflansches (44) am Antriebsgehäuseabschnitt (41) mit einem darin vormontierten, vorzugsweise eingeklebten, Lageraußenring (22) des getriebeseitigen Antriebslagers (20), vorzugsweise inklusive Wälzkörpern (23).
